# EUROPÄISCHE PATENTSCHRIFT

(11) **EP 3 582 902 B1**
(45) Veröffentlichungstag und Bekanntmachung des Hinweises auf die Patenterteilung: **18.11.2026**
(21) Anmeldenummer: 18710999.6
(22) Anmeldetag: 14.02.2018
(51) Int. Cl.: B04B 1/20

(54) **VOLLMANTELSCHNECKENZENTRIFUGEN-SCHNECKE**
SOLID-BOWL CENTRIFUGE SCREW
VIS SANS FIN DE CENTRIFUGEUSE À VIS À BOL PLEIN

(30) Priorität: 15.02.2017 DE 102017103069
(43) Veröffentlichungstag der Anmeldung: 25.12.2019
(73) Patentinhaber: Flottweg SE, 84137 Vilsbiburg (DE)
(72) Erfinder: SCHEIDHAMMER, Matthias, 84137 Vilsbiburg (DE); MEYER, Manfred, 84155 Bodenkirchen (DE)
(74) Vertreter: Meissner Bolte Partnerschaft mbB
(86) Internationale Anmeldenummer: PCT/DE2018/100133
(87) Internationale Veröffentlichungsnummer: WO 2018/149455

(56) Entgegenhaltungen:
- DE-A1- 2 907 318
- DE-C2- 3 390 482
- DE-T2- 69 314 910
- US-A- 3 642 139

## Beschreibung

### Hintergrund der Erfindung

Die Erfindung betrifft eine Vollmantelschneckenzentrifugen-Schnecke mit einer Schneckenwendel. Ferner betrifft die Erfindung ein Herstellungsverfahren einer Vollmantelschneckenzentrifugen-Schnecke.

Bekannte Vollmantelschneckenzentrifugen (siehe z.B. DE3390482C2) umfassen eine rotierende Trommel und eine darin angeordnete Trommel. Die Vollmantelschneckenzentrifugen-Schnecke weist in der Regel eine hohlzylinderförmige bzw. rohrförmige Schneckennabe auf, an der eine Schneckenwendel ausgebildet ist. Die Schneckenwendel erstreckt sich in der Regel als ein gewundenes Blech außenseitig um die Schneckennabe. Das Blech steht dabei nach radial außen in etwa rechtwinklig derart weit ab, dass die Schneckenwendel die sie umgebende Trommel nahezu berührt.

Bei rotierender Trommel taucht die dann ebenfalls rotierende Schneckenwendel in ein sich in der Trommel befindendes Phasengemisch ein. Aus dem Phasengemisch fördert die Schneckenwendel eine sich nach radial außen separierende schwere bzw. dichtere, erste Phase heraus. Radial innen sammelt sich währenddessen eine leichtere bzw. weniger dichte, zweite Phase. Die schwere, erste Phase umfasst je nach Anwendungsgebiet oftmals besonders schwere, körnige Feststoffe, wie Erde, Sand und Steine.

Gerade bei solch schweren, körnigen Feststoffen ist im Zusammenwirken mit den hohen Rotationsgeschwindigkeiten der Trommel die Belastung auf die Vollmantelschneckenzentrifugen-Schnecke sehr groß.

### Zugrundeliegende Aufgabe

Der Erfindung liegt die Aufgabe zugrunde, eine Vollmantelschneckenzentrifugen-Schnecke zu schaffen, die diese Belastungen in allen Betriebszuständen sicher übersteht und zugleich besonders kostengünstig herzustellen ist.

### Erfindungsgemäße Lösung

Diese Aufgabe ist erfindungsgemäß mit einer Vollmantelschneckenzentrifugen-Schnecke nach Anspruch 1 geschaffen. Die Erfindung ist ferner auf ein Herstellungsverfahren einer Vollmantelschneckenzentrifugen-Schnecke gemäß dem Anspruch 9 gerichtet.

Erfindungsgemäß ist die Schneckenwendel einer Schnecke einer Vollmantelschneckenzentrifuge nicht als ein gewundenes Blech gestaltet, das als solches eine konstante Dicke aufweisen und entsprechend im Querschnitt betrachtet ein Rechteck darstellen würde. Stattdessen ist die Schneckenwendel gezielt mit einer profilierten Wendelquerschnittsfläche gestaltet, die also solches in radialer Richtung unterschiedlich dick gestaltet ist.

Mit der derart profilierten Wendelquerschnittsfläche kann die Schneckenwendel abschnittsweise gezielt an ihre statische und dynamische Belastungssituation angepasst sein. Auf diese Weise ist es möglich mit geringem Materialaufwand und auch geringem Fertigungsaufwand eine Schneckenwendel zu schaffen, die bei gleichen oder sogar geringeren Kosten höheren Belastungen standhält und auch höhere Lebensdauern aufweist.

### Vorteilhafte Weiterbildungen der Erfindung

Bei einer vorteilhaften Weiterbildung der Erfindung ist die Wendelquerschnittsfläche mit einem im Vergleich zu einem Wendelhals verdickten Wendelfuß gestaltet. Der verdickte Wendelfuß bildet eine statisch stabile Verbindung für einen von dort radial nach außen ragenden Wendelhals und Wendelkopf. Dabei kann der Wendelhals dünner gestaltet sein, als bei herkömmlichen Schneckenwendeln. Ferner ist vorteilhaft die Schneckenwendel insgesamt sich nach radial außen verjüngend gestaltet.

Die Wendelquerschnittsfläche ist ferner vorzugsweise am Übergang zu einer Schneckennabe mit einer Rundung, Schrägung oder Fase gestaltet. Der derartig konkav und zugleich rund gestaltete Übergang von der Schneckennabe zu der Schneckennabe verringert die an dieser Stelle ansonsten vorherrschende Kerbwirkung und erhöht dort dadurch die statische und dynamische Festigkeit. Vorzugsweise ist die Schneckenwendel dabei mit einem schweißtechnischen Direktanschluss an die Schneckennabe gekoppelt.

Bei einer weiteren vorteilhaften Ausgestaltung der Erfindung ist die Wendelquerschnittsfläche mit einem Wendelfuß mit zwei weitgehend radial gerichteten Stützstegen und einem dazwischen befindlichen Freiraum gestaltet. Die Stützstege bilden damit im Querschnitt betrachtet sozusagen zwei Beine, welche zu einer höhen Stabilität der derartigen Schneckenwendelanordnung führen. Darüber hinaus kann die derartige Anordnung mit besonders wenig Materialverbrauch gestaltet werden. Mit dem vergleichsweise wenigen Material ergibt sich auch eine zugleich geringe Masse der Gesamtanordnung. Dies ist im Hinblick auf das Beschleunigungsverhalten der Gesamtanordnung besonders vorteilhaft.

Mindestens einer der Stützstege ist vorzugsweise von mindestens einer Durchgangsöffnung durchsetzt. Die Durchgangsöffnung reduziert die sich ergebende Gesamtmasse weiter. Ferner kann die Durchgangsöffnung vorteilhaft gezielt zum Durchleiten von geklärtem Gut und zum Durchleiten von Sperrfluiden genutzt werden.

Die mindestens eine Durchgangsöffnung ist bevorzugt allein in dem von der Räumseite der Schneckenwendel abgewandten Stützsteg ausgebildet. Die derart gestaltete Schneckenwendel ist dann an ihrer Räumseite vollflächig gestaltet, während an ihrer Rückseite mittels durchbrochener Stützstege eine zusätzliche Abstützung geschaffen ist. Diese Abstützung ist zugleich besonders leicht bzw. massearm.

Die Wendelquerschnittfläche erstreckt sich ferner vorteilhaft mit einem ersten Abschnitt in Radialrichtung und ist mit einem zweiten Abschnitt zur Radialrichtung der Schnecke geneigt. Die derartige Schneckenwendel weist also im Querschnitt betrachtet einen in Axialrichtung geneigten Wendelkopf auf. Der geneigte Wendelkopf kann gezielt eingesetzt werden, um mittels der Schneckenwendel eine schiebende, nach radial innen gerichtete Förderwirkung bzw. Räumwirkung oder eine ziehende, nach radial außen gerichtete Räumwirkung zu erzielen. Der Anstellwinkel bzw. die Neigung des Wendelkopfes zur Radialrichtung beträgt dabei vorzugsweise zwischen 5° und 45°, insbesondere zwischen 7° und 30°.

Gemäß der Erfindung ist die Wendelquerschnittfläche zumindest in einem Abschnitt in Radialrichtung gewölbt gestaltet. Mit der gewölbten Querschnittsform ist eine Schale geschaffen, die gezielt in einem radialen Abstand zur Drehachse der Trommel eine sich dort ablagernde Phase gesammelt vor sich her transportiert. Darüber hinaus schafft diese Schale eine zusätzliche Versteifung innerhalb der ansonsten weitgehend nur nach radial außen ausgerichteten Schneckenwendel.

Darüber hinaus ist an der erfindungsgemäßen Vollmantelschneckenzentrifugen-Schnecke vorteilhaft die Wendelquerschnittsfläche mit einem im Vergleich zu einem Wendelhals verdickten Wendelkopf gestaltet. Der verdickte Wendelkopf bildet eine Art Räumkante, die zusätzlich versteifend wirkt. Die Räumkante ist vorteilhaft mit einer verschleißfesten Beschichtung versehen.

Erfindungsgemäß ist die erfindungsgemäße Schneckenwendel mittels formgebendem Aufbauschweißen hergestellt. Erfindungsgemäß vorteilhaft ist die erfindungsgemäße Schneckenwendel mittels Schweißen mit aktivem, reaktionsfähigem Schweißgas oder mit inertem Schweißgas als formgebendem Aufbauschweißen hergestellt. Solche Schweißverfahren werden auch als MAG- bzw. MIG-Schweißen bzw. als Schweißen mit Aktivgas oder Inertgas bezeichnet. Zusammengefasst werden solche Verfahren als Metallschutzgasschweißen (MSG) bezeichnet. Solche Schweißverfahren sind in der Norm EN ISO 4063: Prozess 135 und 131 definiert.

Darüber hinaus wird erfindungsgemäß bevorzugt gezielt ein Schweißgas aus bestimmten Untergruppen von Schweißgasen ausgewählt. Schweißgase sind gemäß Norm DIN EN ISO 14175 in die Hauptgruppen I, M1, M2, M3, C, R, N, O und Z eingeteilt. Von den Schweißgasen diesen Hauptgruppen werden vorzugsweise nur solche Schweißgase gewählt, die in die Hauptgruppen I, M1, M2 und N fallen. Andere Schweißgase werden gemäß der Erfindung bewusst ausgenommen, denn diese weiteren Schweißgase, so hat sich gemäß der Erfindung gezeigt, sind für die erfindungsgemäß angestrebte Lösung nicht zielführend.

Die Hauptgruppe I umfasst Schweißgase mit 100 Volumen-Prozent nominell Argon (Untergruppe 1), 100 Volumen-Prozent nominell Helium (Untergruppe 2) und 0,5 bis 95 Volumen-Prozent nominell Helium sowie Rest Argon (Untergruppe 3). Diese Schweißgase sind vollständig inert.

Die Hauptgruppe M1, Untergruppe 1 umfasst Schweißgase mit 0,5 bis 5,0 Volumen-Prozent nominell Kohlendioxid, 0,5 bis 5,0 Volumen-Prozent nominell Wasserstoff sowie Rest Argon oder Helium. Diese Schweißgase sind gering oxidierend und nur gering reduzierend. Die Hauptgruppe M1, Untergruppe 2 umfasst Schweißgase mit 0,5 bis 5,0 Volumen-Prozent nominell Kohlendioxid sowie Rest Argon oder Helium. Diese Schweißgase sind gering oxidierend. Die Hauptgruppe M1, Untergruppe 3 umfasst Schweißgase mit 0,5 bis 3,0 Volumen-Prozent nominell Sauerstoff sowie Rest Argon oder Helium. Diese Schweißgase sind ebenfalls gering oxidierend. Die Hauptgruppe M1, Untergruppe 4 umfasst Schweißgase mit 0,5 bis 5,0 Volumen-Prozent nominell Kohlendioxid, 0,5 bis 3,0 Volumen-Prozent nominell Sauerstoff sowie Rest Argon oder Helium. Diese Schweißgase sind wiederum gering oxidierend.

Die Hauptgruppe M2, Untergruppe 0 umfasst Schweißgase mit 5,0 bis 15,0 Volumen-Prozent nominell Kohlendioxid sowie Rest Argon oder Helium. Diese Schweißgase sind wenig oxidierend. Die Hauptgruppe M2, Untergruppe 1 umfasst Schweißgase mit 15,0 bis 25,0 Volumen-Prozent nominell Kohlendioxid sowie Rest Argon oder Helium. Diese Schweißgase sind ebenfalls wenig oxidierend. Die Hauptgruppe M2, Untergruppe 2 umfasst Schweißgase mit 3,0 bis 10,0 Volumen-Prozent nominell Sauerstoff sowie Rest Argon oder Helium. Diese Schweißgase sind ebenfalls noch wenig oxidierend. Die Hauptgruppe M2, Untergruppe 3 umfasst Schweißgase mit 0,5 bis 5,0 Volumen-Prozent nominell Kohlendioxid, 3,0 bis 10,0 Volumen-Prozent nominell Sauerstoff sowie Rest Argon oder Helium. Die Hauptgruppe M2, Untergruppe 4 umfasst Schweißgase mit 5,0 bis 15,0 Volumen-Prozent nominell Kohlendioxid, 0,5 bis 3,0 Volumen-Prozent nominell Sauerstoff sowie Rest Argon oder Helium. Die Hauptgruppe M2, Untergruppe 5 umfasst Schweißgase mit 5,0 bis 15,0 Volumen-Prozent nominell Kohlendioxid, 3,0 bis 10,0 Volumen-Prozent nominell Sauerstoff sowie Rest Argon oder Helium. Die Hauptgruppe M2, Untergruppe 6 umfasst Schweißgase mit 15,0 bis 25,0 Volumen-Prozent nominell Kohlendioxid, 0,5 bis 3,0 Volumen-Prozent nominell Sauerstoff sowie Rest Argon oder Helium. Die Hauptgruppe M2, Untergruppe 7 umfasst Schweißgase mit 15,0 bis 25,0 Volumen-Prozent nominell Kohlendioxid, 3,0 bis 10,0 Volumen-Prozent nominell Sauerstoff sowie Rest Argon oder Helium. Auch diese Schweißgase sind noch vergleichsweise wenig oxidierend.

Die Hauptgruppe N, Untergruppe 1 umfasst Schweißgase mit 100 Volumen-Prozent nominell Stickstoff. Die Hauptgruppe N, Untergruppe 2 umfasst Schweißgase mit 0,5 bis 5,0 Volumen-Prozent nominell Stickstoff sowie Rest Argon oder Helium. Die Hauptgruppe N, Untergruppe 3 umfasst Schweißgase mit 5,0 bis 50,0 Volumen-Prozent nominell Stickstoff sowie Rest Argon oder Helium. Die Hauptgruppe N, Untergruppe 4 umfasst Schweißgase mit 0,5 bis 1,0 Volumen-Prozent nominell Wasserstoff, 0,5 bis 5,0 Volumen-Prozent nominell Stickstoff sowie Rest Argon oder Helium. Die Hauptgruppe N, Untergruppe 5 umfasst Schweißgase mit 0,5 bis 50,0 Volumen-Prozent nominell Wasserstoff sowie Rest Stickstoff. Diese Schweißgase sind sämtlich reaktionsträge, sie sind mit hohem Argon- oder Helium-Gehalt inert und sie sind selbst mit steigendem Wasserstoff-Gehalt nur wenig reduzierend.

Zusammenfassend werden erfindungsgemäß also gezielt Schweißgase gewählt, die inert sind, wenig oxidierend und/oder wenig reduzierend. Wie sich erfindungsgemäß gezeigt hat, kann mit einem solchen Verfahren bei dem formgebenden Aufbauschweißen mit einer oxidationsarmen Schweißraupe und weitgehend ohne Schlacke gearbeitet werden. Damit können die Schweißnähte bzw. Schweißraupen besonders gut formschlüssig und stoffschlüssig sowie aneinanderhaftend übereinandergelegt werden. Darüber hinaus kann mit einem besonders schnellen Schweißtempo gearbeitet werden, das besonders kurze Herstellungszeiten ermöglicht. Der eigentliche Vorteil des schnellen Schweißtempos liegt darin, dass die Schneckennabe und bereits aufgebrachte Schweißraupen beim Schweißen nur wenig punktuell erhitzt werden. Es entsteht damit nur wenig Verzug bzw. Verformung. Der besondere Vorteil der erfindungsgemäßen Vorgehensweise liegt aber überraschenderweise darin, dass ein solches Aufbauschweißen eine besonders hohe Verschleißfestigkeit der dabei hergestellten Wendelfläche ergibt.

Bei einer vorteilhaften Weiterbildung der Erfindung weist das Schweißgas einen Anteil an Kohlendioxid von weniger als zwanzig Volumen-Prozent nominell auf. Ein derart geringer Kohlendioxidgehalt ermöglicht es insbesondere, dass erfindungsgemäß vorteilhaft Baustähle mittels Impulsschweißen verarbeitet werden können. Zugleich ist ein vergleichsweise hoher Abbrand des Schweißdrahtes möglich. Damit ergeben sich ein hoher Masseaufbau während des Schweißens und eine besonders schnelle Arbeitsweise. Vorzugsweise wird als Schweißgas ferner Schweißgas verwendet, das einen Anteil an Sauerstoff von weniger als drei Volumen-Prozent nominell aufweist. Solche Schweißgase sind besonders wenig oxidierend. Schweißgase, die einen hohen Anteil an Argon aufweisen, sind ferner besonders preiswert.

Besonders bevorzugt wird die erfindungsgemäße Schutzgas-Schweißeinrichtung mit einem Impulslichtbogen betrieben. Ein solcher Impulslichtbogen lässt eine präzise Steuerung der Abschmelzung des Schweißdrahts an der Schutzgas-Schweißeinrichtung zu. Darüber hinaus kann der Wärmeeintrag in das Werkstück gezielt besonders gering gehalten und temperaturbedingte Verformung kann gering gehalten werden.

Der elektrische Schweißstrom der derartigen Impulslichtbogen-Schweißeinrichtung weist vorzugsweise einen Grundstrom kleiner 200 Ampere und einen Impulsstrom größer 200 Ampere auf. Solche Schweißströme sind vorteilhaft bei besonders präzisem Materialaufbau mit vergleichsweise kleiner Abschmelzleistung. Als Schweißgas wird dabei vorteilhaft ein Schweißgas mit 98 Volumen-Prozent nominell Argon und 2 Volumen-Prozent nominell Kohlendioxid verwendet.

Von besonderem Vorteil ist es ferner, die erfindungsgemäße Schutzgas-Schweißeinrichtung mit einem Kurzlichtbogen, insbesondere einem energiereduzierten Kurzlichtbogen zu betreiben. Ein solches Verfahren mit Kurzlichtbogen wird auch als Cold-Arc bezeichnet, ein Verfahren mit besonders kaltem Lichtbogen also. Für die Erzielung eines dennoch schmelzstarken Lichtbogens wird besonders vorteilhaft mit einem verstärkten Aufschmelzstromimpul gearbeitet.

Beim Aufbauschweißen wird ferner bevorzugt die erste Schweißschicht breiter ausgebildet, als die zweite Schweißschicht. Dies geschieht insbesondere indem die Schutzgas-Schweißeinrichtung während des Auftragens der ersten Schweißschicht mit einem höheren Schweißstrom betrieben wird, als während des Aufbringens der mindestens einen zweiten Schweißschicht. Alternativ kann bei der ersten Schweißschicht pendelnd geschweißt werden, mit langsamerer Schweißgeschwindigkeit oder mit höherem Drahtvorschub. Mit der derartigen Vorgehensweise wird die erste Schweißschicht mit besonders starkem bzw. großem Masseauftrag ausgeführt. Die derart volumenstarke erste Schweißschicht wird dann von einer zweiten Schweißschicht überlagert, die weniger Volumen aufweist und demnach schmäler ist. Zusammen ergibt sich ein gerundeter Fuß bzw. Ansatz an dem Grundkörper des Werkstücks, der eine geringe Kerbwirkung und damit eine hohe Steifigkeit aufweist.

Die erfindungsgemäße Schutzgas-Schweißeinrichtung wird besonders vorteilhaft mit einem Schweißdraht, oder vorteilhaft auch zwei Schweißdrähten (Twin-Schweißverfahren) mit einem Durchmesser von 0,5 mm bis 3,0 mm, bevorzugt von 1,0 mm bis 1,6 mm betrieben. Überraschenderweise führt gerade ein solcher Schweißdraht-Durchmesser zu einer hohen Schweißgeschwindigkeit und zugleich zu besonders geringer thermisch bedingter Verformung. Besonders bevorzugt sind einzelne Schweißschichten bzw. Schweißlagen mit einer Breite von 6 bis 7 mm. Vorteilhaft ist insbesondere auch ein im Querschnitt rechteckiges Schweißband.

Der Grundkörper des erfindungsgemäßen Werkstücks wird bevorzugt während des Herstellens des metallischen Werkstücks bewegt. Mit dem Bewegen wird das Werkstück dabei an seiner Schweißstelle derart ausgerichtet, dass sich für die aufgebrachte Schweißlage eine optimale Position ergibt. Dabei wird die Schweißlage besonders bevorzugt auf einer waagrechten Oberfläche aufgebracht. Vorteilhaft ist es auch, wenn die Schweißlage auf eine in Schweißrichtung leicht ansteigende Oberfläche aufgebracht wird. Der Steigungswinkel beträgt vorzugsweise zwischen 5° und 15°, vorteilhaft zwischen 7° und 10°. Der Grundkörper wird entsprechend vorzugsweise derart bewegt, dass am Schweißort der Schutzgas-Schweißeinrichtung eine horizontale Schweißoberfläche oder eine in Schweißrichtung der Schutzgas-Schweißeinrichtung ansteigende Schweißoberfläche vorliegt.

Bei einer vorteilhaften Weiterbildung der Erfindung ist die Schneckenwendel mit einer in Längsrichtung der Schnecke variierenden Wendelsteigung gestaltet. Mittels der derartigen variierenden Wendelsteigung kann die Geschwindigkeit des Materialtransports, insbesondere des Transports der schweren Phase, in Längsrichtung der Schnecke je nach Bedarf angepasst werden. Eine geringe Wendelsteigung verbessert den Materialtransport bei schwer förderbarem Feststoff. Eine solch erfindungsgemäß vorteilhafte variierende Wendelsteigung kann mittels des formgebenden Aufbauschweißens besonders schnell und einfach mit hoher Variabilität und geringem Arbeitskräfteaufwand hergestellt werden. Es müssen lediglich unterschiedliche Steigungsbereiche in ein eine automatische Schweißeinrichtung steuerndes Datenverarbeitungsgerät eingegeben werden.

Entsprechend schnell, einfach und kostengünstig in der Herstellung kann mittels des formgebenden Aufbauschweißens die Schneckenwendel erfindungsgemäß vorteilhaft als eine mehrgängige Wendel gestaltet sein. Eine solche mehrgängige Wendel umfasst als Gänge mehrere kongruente Schraubenlinien bzw. Helices, die in ihrer Ganghöhe gegeneinander versetzt sind. Mittels einer solchen Schneckenwendel mit mehrgängiger Wendel kann eine große axiale Bewegung bei vergleichsweise geringer Drehung erzeugt werden. Ein besonders schneller Materialtransport in Längsrichtung der Schneckenwendel kann damit erreicht werden.

Erfindungsgemäß bevorzugt ist die Schneckenwendel ferner mit einem Wuchtgewicht versehen, das ebenfalls mittels formgebendem Aufbauschweißen hergestellt ist. Mit mindestens einem solchen Wuchtgewicht können ungleiche Massenverteilungen und konstruktive Unwuchten an der Schneckenwendel und an der damit verbundenen Schneckennabe ausgeglichen sein. Das einzelne Wuchtgewicht kann besonders präzise hinsichtlich Ort und Größe auf die Schneckenwendel geschweißt sein. Zudem ist das derart auftragsgeschweißte Wuchtgewicht besonders stabil dank des stoffschlüssigen Schweißauftrags an der Schneckenwendel angebracht. Der Wuchtaufwand ist damit erheblich verringert. Eine solche stabile und ortsgenaue Anordnung des einzelnen Wuchtgewichts ist insbesondere bei den hohen während des Betriebs von Vollmantelschneckenzentrifugen vorherrschenden Rotationsgeschwindigkeiten von großem Vorteil. Eine Unwucht und dadurch erzeugte Vibrationen würden sich andernfalls um ein Vielfaches belastend auf nahezu sämtliche Bauteile auswirken.

Bei einer vorteilhaften Weiterbildung der Erfindung ist die Schneckenwendel mit einer in Längsrichtung der Schnecke variierenden Wendelsteigung gestaltet. Mittels der derartigen variierenden Wendelsteigung kann die Geschwindigkeit des Materialtransports, insbesondere des Transports der schweren Phase, in Längsrichtung der Schnecke je nach Bedarf angepasst werden. Eine geringe Wendelsteigung ermöglicht einen sehr präzisen Materialtransport pro Zeiteinheit. Zudem ist eine geringe Wendelsteigung insbesondere bei besonders schwerem Material von Vorteil, da für einen solchen Materialtransport dann ein entsprechend geringerer Kraftaufwand erforderlich ist. Damit wird nicht nur die Schneckenwendel in ihrem Verschleiß geschont, sondern auch die Schnecke lagernde Bauteile erleiden wesentlich weniger Abnutzungen. Eine solch erfindungsgemäß vorteilhafte variierende Wendelsteigung kann mittels des formgebenden Aufbauschweißens besonders schnell und einfach mit hoher Variabilität und geringem Arbeitskräfteaufwand hergestellt werden. Es müssen lediglich unterschiedliche Steigungsbereiche in ein eine automatische Schweißeinrichtung steuerndes Datenverarbeitungsgerät eingegeben werden.

Ferner ist es vorteilhaft, die erfindungsgemäße Schneckenwendel mit mindestens einer die Schneckenwendel vollständig durchsetzenden Durchgangsöffnung zu versehen, die ebenfalls mittels formgebendem Aufbauschweißen hergestellt ist. Eine solche Durchgangsöffnung ermöglicht einen wesentlich schnelleren und energiesparenderen Abtransport der leichteren, radial innen liegenden Phase im Vergleich zu einem Abtransport mittels einer Schneckenwendel ohne Durchgangsöffnung. Ohne Durchgangsöffnung muss die radial innen liegende, leichte Phase entlang sämtlicher Windungen der Schneckenwendel entgegen einer Transportrichtung der radial außen liegenden, schweren Phase abfließen. Dieser Weg entlang der Windungen ist erheblich länger, verglichen mit einem Weg, den die leichte Phase bei einem Durchtritt durch mindestens eine Durchgangsöffnung zurückzulegen hat. Die derartige Durchgangsöffnung kann erfindungsgemäß bevorzugt bereits beim formgebenden Aufbauschweißen der Schneckenwendel innerhalb der Wendelfläche ausgespart worden sein. In nur einem Arbeitsschritt ist damit die Schneckenwendel besonders schnell und kostengünstig herstellbar.

Darüber hinaus ist erfindungsgemäß vorteilhaft an der Schneckenwendel eine aufstauend wirkende Scheibe in Form einer Stauscheibe, Tauchscheibe oder Flotatscheibe ausgebildet, die ebenfalls mittels formgebendem Aufbauschweißen hergestellt ist. Eine derart hergestellte Scheibe kann besonders stabil, einfach und kostengünstig insbesondere an der zugehörigen Schneckennabe angebracht sein. Dabei ist die aufstauend wirkende Scheibe bevorzugt dort an der Schneckennabe angebracht, wo keine Wendelschaufel angeordnet ist. Besonders bevorzugt befindet sich die aufstauend wirkende Scheibe an einem konusförmigen Abschnitt der Schneckennabe, nach dem in Austragsrichtung der schweren Phase nur noch schwere Phase abzutransportieren ist. Die aufstauend wirkende Scheibe endet mit ihrem Durchmesser dabei radial weiter innen als die Trommel und dient damit als ein Wehr zum Verhindern eines Weitertransports der radial innen liegenden leichteren Phase in Austragsrichtung der schweren Phase.

Erfindungsgemäß vorteilhaft ist ferner an der Schneckenwendel ein Räumer ausgebildet, der ebenfalls mittels formgebendem Aufbauschweißen hergestellt ist. Der Räumer ist derart hergestellt ebenfalls besonders kostengünstig in der Produktion und besonders stabil während des Betriebs. Gerade ein solcher Räumer muss besonders stabil sein und hohen Krafteinwirkungen standhalten können. Er hat an einem in Austragsrichtung der schweren Phase sich befindenden Endbereich der Schneckenwendel die Funktion, dieselbe von schwerer Phase, insbesondere Feststoffen, abzuräumen.

### Kurzbeschreibung der Zeichnungen

Nachfolgend werden Ausführungsbeispiele der erfindungsgemäßen Lösung anhand der beigefügten schematischen Zeichnungen näher erläutert. Es zeigt:
- Fig. 1: einen ersten Teil eines Längsschnitts einer erfindungsgemäßen Vollmantelschneckenzentrifugen-Schnecke,
- Fig. 2: einen zweiten Teil des Längsschnitts gemäß Fig. 1,
- Fig. 3: eine Seitenansicht des Ausschnitts III gemäß Fig. 1,
- Fig. 4: das Detail IV gemäß Fig. 1 in vergrößerter Darstellung,
- Fig. 5: die Draufsicht V gemäß Fig. 2,
- Fig. 6: Varianten des Details VI gemäß Fig. 2,
- Fig. 7: eine erste Variante der Ansicht VII gemäß Fig. 5,
- Fig. 8: eine zweite Variante der Ansicht VII gemäß Fig. 5,
- Fig. 9: eine dritte Variante der Ansicht VII gemäß Fig. 5 und
- Fig. 10: eine vierte Variante der Ansicht VII gemäß Fig. 5.

### Detaillierte Beschreibung des Ausführungsbeispiels

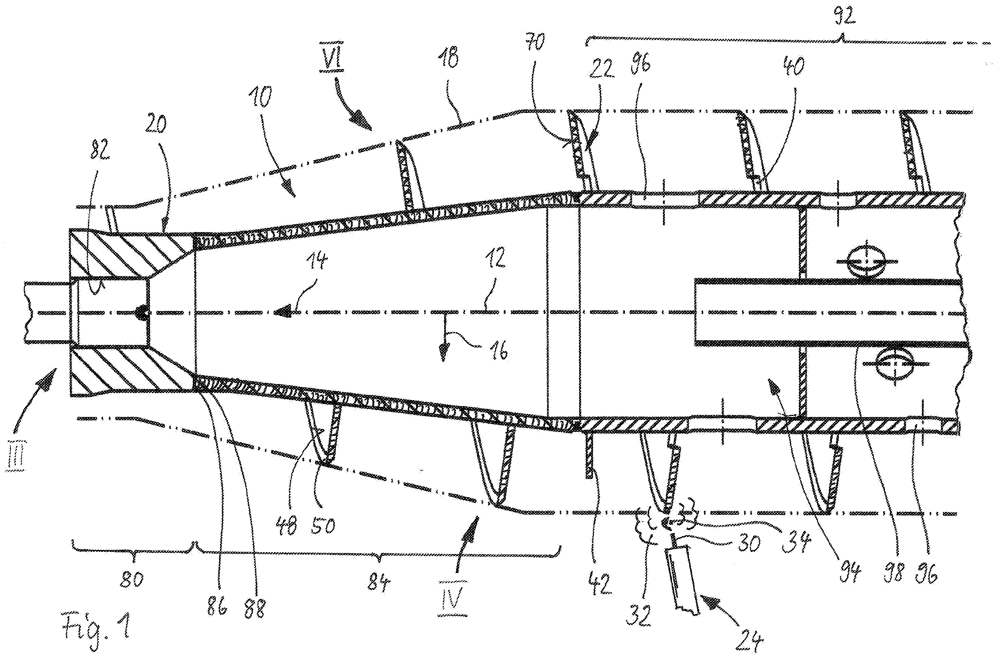

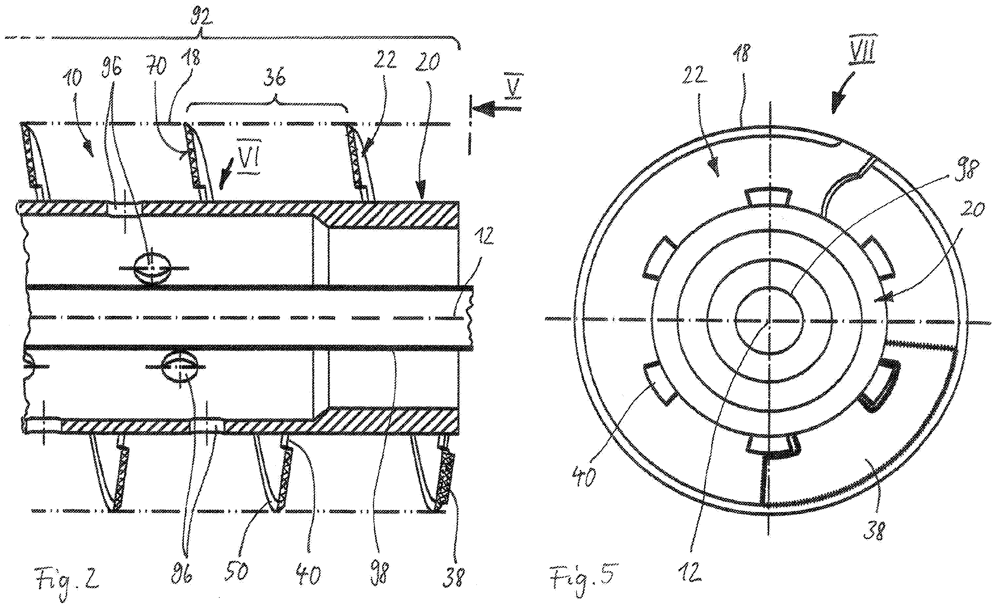

In den Fig. 1 bis 10 ist eine Schnecke 10 einer Vollmantelschneckenzentrifuge dargestellt, die als hier genanntes Werkstück herzustellen ist. Die Schnecke 10 weist eine Drehachse 12 auf, die eine Axialrichtung 14 und eine Radialrichtung 16 definiert.

Die Schnecke 10 ist von einer Trommel 18 umgeben und dient dazu, innerhalb der Trommel 18 aus einem Phasengemisch (nicht dargestellt) eine schwere Phase in Axialrichtung 14 auszutragen. Die Schnecke 10 ist mit einer zentralen Schneckennabe 20 und einer diese wendelförmig umgebenden Schneckenwendel 22 gestaltet.

Ferner ist eine Schutzgas-Schweißeinrichtung 24 bereitgestellt, mittels der die Schneckenwendel 22 in einem formgebenden Aufbauschweißen hergestellt ist. Dazu ist mittels der Schutzgas-Schweißeinrichtung 24 auf der Schneckennabe 20 eine erste Schweißschicht 26 und auf diese dann eine zweite Schweißschicht 28 aufgebracht. Ferner sind weitere zweite Schweißschichten in dieser Art übereinander bzw. aufeinander aufgebracht worden. So ist insgesamt ein flächiges, schraubenförmiges Element bzw. eine gewendelte Fläche entstanden, das bzw. die die Schneckenwendel 22 bildet.

Die Schneckennabe 20 dient bei diesem Herstellen der Schneckenwendel 22 mittels Aufbauschweißen als ein hier erster Grundkörper und wird während des Herstellens bewegt. Insbesondere wird die Schneckennabe 20 um ihre Drehachse 12 gedreht, während zugleich die Schutzgas-Schweißeinrichtung 24 in Axialrichtung 14 verfahren und dabei in Radialrichtung 16 schrittweise angehoben wird.

Die Schutzgas-Schweißeinrichtung 24 umfasst einen Schweißdraht 30 und wird im MSG-Verfahren mit einem Schweißgas 32 betrieben. Vorliegend hat das Schweißgas 32 aus einer der Untergruppen der Hauptgruppen I, M1, M2 oder N der Norm DIN EN ISO 14175 ausgewählt und weist einen Anteil an Kohlendioxid von weniger als 20 Volumen-Prozent nominell sowie einen Anteil an Sauerstoff von weniger als 3 Volumen-Prozent nominell auf. Dabei wird mittels der Schutzgas-Schweißeinrichtung 24 ein Lichtbogen 34 erzeugt, der vorliegend als Impulslichtbogen ausgeführt wird.

Die Schneckenwendel 22 kann auf diese Weise besonders einfach und kostengünstig, verzugsarm und zugleich besonders verschleißfest ausgeführt werden. Insbesondere kann auch eine mehrgängige Wendel einfach hergestellt werden. Auch kann die Schneckenwendel 22 mit einer Wendelsteigung 36 gestaltet werden, die in Axialrichtung 14 bzw. in Längsrichtung der Schnecke 10 variiert, also unterschiedlich groß ist.

An der Schneckenwendel 22 kann ferner mittels des formgebenden Aufbauschweißens zugleich ein Wuchtgewicht 38 hergestellt werden. Das Wuchtgewicht 38 kann mittels einzelner Schweißpunkte und/oder größeren Schweißmaterialanhäufungen individuell und ortsgenau dimensioniert werden. Der Wuchtaufwand ist damit erheblich verringert.

Ferner ist die Schneckenwendel 22 sehr einfach und ohne spanende Verfahren mit diversen Durchgangsöffnungen 40 zu versehen, weil sie mit formgebendem Aufbauschweißen hergestellt ist.

Auch ist an der Schneckenwendel 22 zugleich eine aufstauend wirkende Scheibe 42 mittels formgebendem Aufbauschweißen hergestellt. Die Scheibe 42 kann als Stauscheibe, aber auch als Tauchscheibe oder Flotatscheibe wirken.

Darüber hinaus ist an der Schneckenwendel 22 auch ein Räumer 44 an deren Endbereich an der Schneckennabe 22 mittels des formgebenden Aufbauschweißens angeformt.

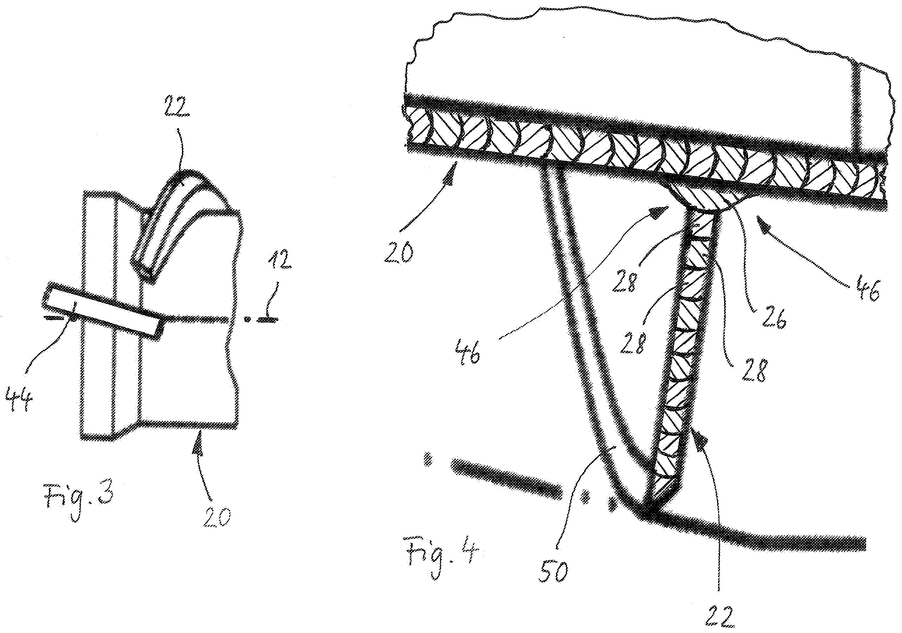

Ein Übergang 46 von der Schneckennabe 20 zur Schneckenwendel 22 ist mittels des formgebenden Aufbauschweißens als Rundung, Fase bzw. Schrägung gestaltet. Dazu ist die erste Schweißschicht 26, wie in Fig. 4 veranschaulicht ist, breiter hergestellt, als die darüber angeordnete zweite Schweißschicht 28. Die breitere Schweißschicht 26 wird insbesondere mit einem höheren Schweißstrom, einem Pendelschweißvorgang oder einem geringeren Schweißvorschub hergestellt.

Eine seitliche Wendelfläche 48 der Schneckenwendel 22 ist nach deren Herstellung mittels Aufbauschweißen mechanisch nachbearbeitet worden. Eine solche Nachbearbeitung ist jedoch nicht zwingend erforderlich. An der Wendelfläche 48 ist ferner wahlweise eine verschleißfeste Beschichtung 50 aus Wolframcarbit hergestellt worden. Diese Beschichtung ist ebenfalls mittels der Schutzgas-Schweißeinrichtung 24 durch Auftragsschweißen als eine einzelne Schicht hergestellt worden.

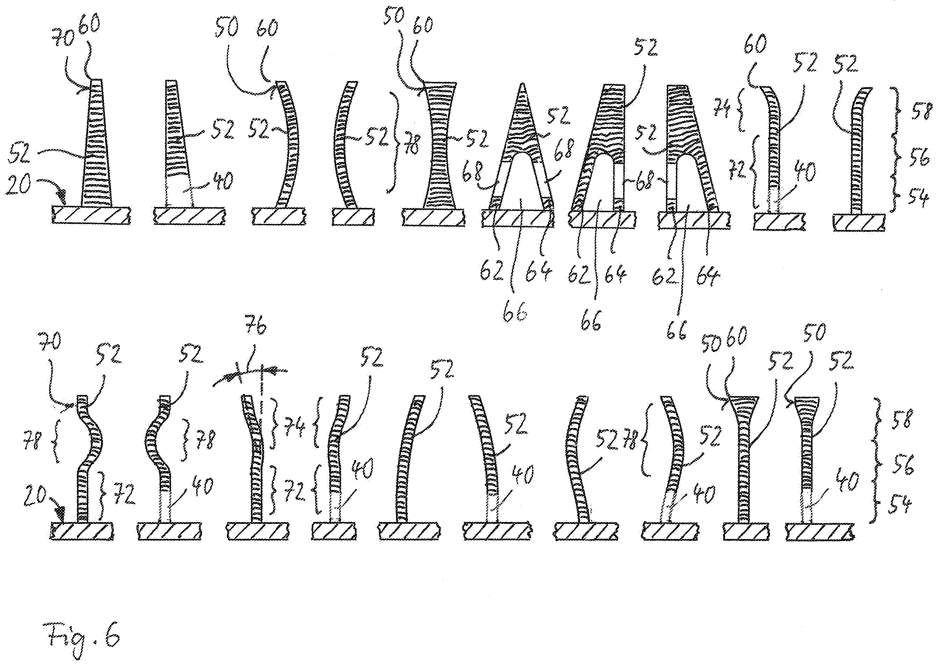

Von der Schneckenwendel 22 ist deren Wendelquerschnittsfläche 52 gemäß der Fig. 6 in verschiedenen Varianten vorteilhaft profiliert ausgebildet. Dabei weist die Wendelquerschnittsfläche 52 radial innen einen Wendelfuß 54, radial weiter außen einen Wendelhals 56 und radial ganz außen einen Wendelkopf 58 auf.

Die Wendelquerschnittsfläche 52 ist gemäß den beiden Varianten in Fig. 6 oben links in Radialrichtung 16 sich nach radial außen verjüngend gestaltet. Gemäß einer Variante in Fig. 6 oben Mitte und zwei Varianten in Fig. 6 unten rechts weist die profilierte Wendelquerschnittsfläche 52 einen Wendelkopf 58 auf, der in Axialrichtung 14 verdickt gestaltet ist.

Bei mehreren Varianten ist an dem Wendelkopf 58 eine axial zur Räumrichtung hin geneigte Räumkante 60 ausgebildet, die die Beschichtung 50 trägt.

Gemäß drei Varianten in Fig. 6 oben Mitte weist die Wendelquerschnittsfläche 52 einen ersten Stützsteg 62 und einen zweiten Stützsteg 64 auf, wobei die Stützstege 62 und 64 weitgehend radial gerichtet sind. In Axialrichtung 14 zwischen den Stützstegen 62 und 64 befindet sich ein Freiraum 66. Auf diese Weise ist eine leichte und zugleich statisch besonders stabile Konstruktion geschaffen.

Eine Durchgangsöffnung 68 durchsetzt zumindest einen der Stützstege 62 und 64 und befindet sich insbesondere in dem von einer Räumseite 70 der Schneckenwendel 22 abgewandten, zweiten Stützsteg 64.

Gemäß Varianten in Fig. 6 oben rechts und unten links weist die profilierte Wendelquerschnittsfläche 52 einen ersten Abschnitt 72 auf, der sich in Radialrichtung 16 erstreckt und einen zweiten Abschnitt 74, der zur Radialrichtung 16 geneigt gestaltet ist. Ein Anstellwinkel 76 bzw. eine Neigung dieses zweiten Abschnitts 74 beträgt dabei vorzugsweise zwischen 10° und 40°, insbesondere zwischen 15° und 20°.

Gemäß mehrerer Varianten in Fig. 6 oben und unten weist die profilierte Wendelquerschnittsfläche 52 einen dritten Abschnitt 78 auf, der im Querschnitt betrachtet in der Form einer Schale gewölbt ist.

Die Schneckennabe 20 ist ebenfalls zumindest teilweise mittels formgebendem Aufbauschweißens mit der Schutzgas-Schweißeinrichtung 24 hergestellt worden.

Dabei weist die Schneckennabe 20 bezogen auf Fig. 1 ganz links einen zylindrischen, ersten Längsabschnitt 80 auf, der als hier zweiter Grundkörper für das Aufbauschweißen dient. Der Längsabschnitt 80 ist entsprechend selbst nicht mittels Aufbauschweißen hergestellt worden, sondern herkömmlich als Rohr, welches ferner gedreht und gefräst worden ist.

An dem Längsabschnitt 80 ist mittels Drehen bzw. Drehverfahren eine erste Lagerabstützung 82 für die Schnecke 10 ausgebildet worden.

Auf den Längsabschnitt 80 folgt an der Schneckennabe 20 in Richtung der Drehachse 10 ein kegelstumpfförmiger, zweiter Längsabschnitt 84, der mittels formgebendem Aufbauschweißen hergestellt ist. Dabei sind an dem Längsabschnitt 84 zunächst eine ringförmige erste Schweißschicht 86 und auf diese dann in Richtung der Drehachse 12 bzw. entgegen der Axialrichtung 14 eine zweite Schweißschicht 88 sowie viele weitere zweite Schweißschichten aufgebracht worden.

Beim derartigen Aufbauschweißen ist der erste Längsabschnitt 80 bewegt und insbesondere gedreht worden, wobei die Schutzgas-Schweißeinrichtung 24 dann entgegen der Axialrichtung 14 zu verfahren, ansonsten aber nur geringfügig radial zu bewegen ist, um die Kegelstumpfform auszubilden.

Auf den zweiten Längsabschnitt 84 folgt entgegen der Axialrichtung 14 ein zylindrischer, dritter Längsabschnitt 92, der im Wesentlichen rohrförmig und in konventioneller Weise hergestellt ist. Der Längsabschnitt 92 kann auch vorteilhaft mittels Aufbauschweißen hergestellt sein und dabei insbesondere gitterförmig gestaltet sein. An dem Längsabschnitt 92 befindet sich eine Einlaufkammer 94, in die das zu klärende Phasengemisch einzubringen ist. Diese Einlaufkammer 94 ist besonders vorteilhaft mittels formgebendem Aufbauschweißen hergestellt, weil an ihre dann individuell gestaltete Strömungsflächen ausgebildet sein können.

Ferner können Austrittsöffnungen 96, welche im Längsabschnitt 92 im Bereich der Einlaufkammer 94 herzustellen sind, vorteilhaft mittels Aufbauschweißen ausgebildet werden.

Im Bereich des Längsabschnitts 92 befindet sich radial innen bzw. konzentrisch zur Drehachse 12 ein Einlaufrohr 98. Dieses Einlaufrohr 98 ist ebenfalls vorteilhaft mittels formgebendem Aufbauschweißen hergestellt, so dass auch an ihm gezielt besondere Strömungs- und Leitflächen ausgebildet sein können.

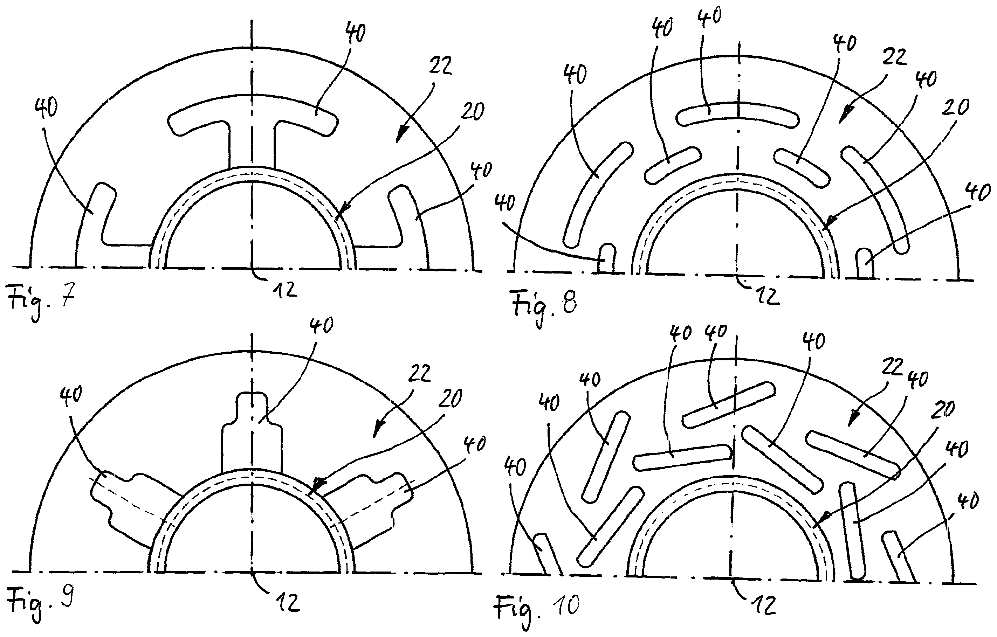

In den Fig. 7 bis 10 sind verschiedene Ausführungsformen von Durchgangsöffnungen 40 in der jeweils zugehörigen Schneckenwendel 22 mit zugehöriger Schneckennabe 20 dargestellt.

Dabei weist die einzelne Durchgangsöffnung 40 gemäß Fig. 7 radial mittig einen in Umfangsrichtung besonders breiten Abschnitt auf. Durch diesen Abschnitt kann gezielt eine Mittelschicht des zu klärenden Phasengemisches durch die Schneckenwendel 22 hindurchtreten.

Gemäß Fig. 8 sind in Radialrichtung 16 mehrere Durchgangsöffnung 40 auf zwei unterschiedlichen Radien angeordnet. Dabei weisen die radial äußeren Durchgangsöffnungen 40 in Umfangsrichtung eine größere Breite auf, als die radial innen liegenden Durchgangsöffnungen. Auch mit dieser Ausführungsform kann gezielt zu klärendes Material einer Umfangsschicht durch die Schneckenwendel 22 hindurchtreten.

In Fig. 9 ist eine Ausführungsform dargestellt, bei der die Durchgangsöffnungen 40 radial innen breiter sind, als radial außen. Dieser Breitenunterschied in Umfangsrichtung ist gestuft gestaltet. Mit dieser Ausführungsform kann an der Schneckenwendel 22 gezielt mehr Material hindurchtreten, wenn dieses nach innen hin den Radius der Stufe erreicht hat.

Fig. 10 zeigt schließlich eine Ausführungsform, bei der die Durchgangsöffnungen 40 als zur Radialrichtung 16 schräg geneigte, gerade Schlitze gestaltet sind. die derartigen Schlitze führen beim Durchtritt von Material durch sie hindurch zu einer Durchmischung und damit zu einem Aufbrechen des zu klärenden Materials.

### Bezugszeichenliste

- 10: Schnecke
- 12: Drehachse
- 14: Axialrichtung
- 16: Radialrichtung
- 18: Trommel
- 20: Schneckennabe
- 22: Schneckenwendel
- 24: Schutzgas-Schweißeinrichtung
- 26: erste Schweißschicht der Schneckenwendel
- 28: zweite Scheißschicht der Schneckenwendel
- 30: Schweißdraht
- 32: Schweißgas
- 34: Lichtbogen
- 36: Wendelsteigung
- 38: Wuchtgewicht
- 40: Durchgangsöffnung
- 42: Scheibe
- 44: Räumer
- 46: Übergang
- 48: Wendelfläche
- 50: Beschichtung
- 52: Wendelquerschnittsfläche
- 54: Wendelfuß
- 56: Wendelhals
- 58: Wendelkopf
- 60: Räumkante
- 62: erster Stützsteg
- 64: zweiter Stützsteg
- 66: Freiraum
- 68: Durchgangsöffnung
- 70: Räumseite
- 72: erster Abschnitt der Wendelquerschnittfläche
- 74: zweiter Abschnitt der Wendelquerschnittfläche
- 76: Anstellwinkel
- 78: dritter Abschnitt der Wendelquerschnittfläche
- 80: erster Längsabschnitt der Schneckennabe
- 82: erste Lagerabstützung
- 84: zweiter Längsabschnitt der Schneckennabe
- 86: erste Schweißschicht an der Schneckennabe
- 88: zweite Schweißschicht an der Schneckennabe
- 92: dritter Längsabschnitt der Schneckennabe
- 94: Einlaufkammer
- 96: Austrittsöffnung
- 98: Einlaufrohr

## Patentansprüche

1. Vollmantelschneckenzentrifugen-Schnecke (10) mit einer Schneckenwendel (22), wobei
die Schneckenwendel (22) mit einer profilierten Wendelquerschnittsfläche (52) gestaltet ist,
wobei
die Schneckenwendel (22) nicht als ein gewundenes Blech, das als solches eine konstante Dicke aufweisen und entsprechend im Querschnitt betrachtet ein Rechteck darstellen würde, gestaltet ist, und die Wendelquerschnittfläche (52) zumindest in einem Abschnitt (78) in Radialrichtung gewölbt ist, wobei die Wendelquerschnittsfläche (52) als solches in radialer Richtung unterschiedlich dick gestaltet ist, **dadurch gekennzeichnet, dass** die Schneckenwendel (22) mittels formgebenden Aufbauschweißen hergestellt ist.

2. Vollmantelschneckenzentrifugen-Schnecke nach Anspruch 1,
**dadurch gekennzeichnet, dass** die Wendelquerschnittsfläche (52) mit einem im Vergleich zu einem Wendelhals (56) verdickten Wendelfuß (54) gestaltet ist.

3. Vollmantelschneckenzentrifugen-Schnecke nach Anspruch 1 oder 2,
**dadurch gekennzeichnet, dass** die Wendelquerschnittsfläche (52) am Übergang (46) zu einer Schneckennabe (20) mit einer Rundung, Schrägung oder Fase gestaltet ist.

4. Vollmantelschneckenzentrifugen-Schnecke nach einem der Ansprüche 1 bis 3,
**dadurch gekennzeichnet, dass** die Wendelquerschnittsfläche (52) mit einem Wendelfuß (54) mit zwei weitgehend radial gerichteten Stützstegen (62, 64) und einem dazwischen befindlichen Freiraum (66) gestaltet ist.

5. Vollmantelschneckenzentrifugen-Schnecke nach Anspruch 4,
**dadurch gekennzeichnet, dass** mindestens einer der Stützstege (62, 64) von mindestens einer Durchgangsöffnung (68) durchsetzt ist.

6. Vollmantelschneckenzentrifugen-Schnecke nach Anspruch 5,
**dadurch gekennzeichnet, dass** die mindestens eine Durchgangsöffnung (68) allein in dem von der Räumseite (70) der Schneckenwendel (22) abgewandten Stützsteg (64) ausgebildet ist.

7. Vollmantelschneckenzentrifugen-Schnecke nach einem der Ansprüche 1 bis 6,
**dadurch gekennzeichnet, dass** die Wendelquerschnittfläche (52) sich mit einem ersten Abschnitt (72) in Radialrichtung erstreckt und mit einem zweiten Abschnitt (74) zur Radialrichtung der Schnecke (10) geneigt ist.

8. Vollmantelschneckenzentrifugen-Schnecke nach einem der Ansprüche 1 bis 7,
**dadurch gekennzeichnet, dass** die Wendelquerschnittsfläche (52) mit einem im Vergleich zu einem Wendelhals (56) verdickten Wendelkopf (58) gestaltet ist.

9. Herstellungsverfahren einer Vollmantelschneckenzentrifugen-Schnecke (10) nach einem der Ansprüche 1 bis 8, wobei die Schneckenwendel (22) mittels formgebenden Aufbauschweißen hergestellt ist.

## Claims

1. A solid bowl screw centrifuge screw (10) with a screw flight (22), wherein
the screw flight (22) is designed with a profiled flight cross sectional surface (52),
wherein
the screw flight (22) is not designed as a coiled sheet metal, which, as such, would have a constant thickness and, viewed in the cross section, would accordingly represent a rectangle, and the
flight cross sectional surface (52) is curved in the radial direction at least in one section (78), wherein the flight cross sectional surface (52) as such is designed of different thickness in the radial direction, **characterized in that** the screw flight (22) is produced by means of shape-forming build-up welding.

2. The solid bowl screw centrifuge screw according to claim 1,
**characterized in that** the flight cross sectional surface (52) is designed with a flight foot (54), which is thickened compared to a flight neck (56).

3. The solid bowl screw centrifuge screw according to claim 1 or 2,
**characterized in that** the flight cross sectional surface (52) is designed with a rounding, skew or bevel at the transition (46) to a screw hub (20).

4. The solid bowl screw centrifuge screw according to one of claims 1 to 3,
**characterized in that** the flight cross sectional surface (52) is designed with a flight foot (54) with two support webs (62, 64) directed largely radially and a free space (66) located therebetween.

5. The solid bowl screw centrifuge screw according to claim 4,
**characterized in that** at least one of the support webs (62, 64) is permeated by at least one through opening (68).

6. The solid bowl screw centrifuge screw according to claim 5,
**characterized in that** the at least one through opening (68) is formed solely in the support web (64) facing away from the scraping side (70) of the screw flight (22).

7. The solid bowl screw centrifuge screw according to one of claims 1 to 6,
**characterized in that** the flight cross sectional surface (52) extends in the radial direction with a first section (72) and is inclined to the radial direction of the screw (10) with a second section (74).

8. The solid bowl screw centrifuge screw according to one of claims 1 to 7,
**characterized in that** the flight cross sectional surface (52) is designed with a flight head (58), which is thickness compared to a flight neck (56).

9. A production method of a solid bowl screw centrifuge screw (10) according to one of claims 1 to 8, wherein the screw flight (22) is produced by means of shape-forming build-up welding.

## Revendications

1. Vis sans fin (10) de centrifugeuse à vis à bol plein, dotée d'une spire de vis (22),
la spire de vis (22) étant conçue avec une surface de section transversale (52) de spire profilée,
la spire de vis (22) n'étant pas conçue sous la forme d'une tôle enroulée, qui en tant que telle, présenterait une épaisseur constante et en conséquence de quoi, considérée dans la section transversale représenterait un rectangle et dans au moins une section (78), la surface de section transversale (52) de spire étant bombée dans la direction radiale, la surface de section transversale (52) de spire en tant que telle étant conçue d'épaisseur différente dans la direction radiale, **caractérisée en ce que** la spire de vis (22) est fabriquée au moyen d'un soudage de mise en forme par rechargement de matière.

2. Vis sans fin de centrifugeuse à vis à bol plein selon la revendication 1,
**caractérisée en ce que** la surface de section transversale (52) de spire est conçue avec un pied de spire (54) épaissi en comparaison avec un col de spire (56).

3. Vis sans fin de centrifugeuse à vis à bol plein selon la revendication 1 ou 2,
**caractérisée en ce qu'**au passage (46) vers un moyeu de vis (20), la surface de section transversale (52) de spire est conçue avec un arrondi, une inclinaison ou un chanfrein.

4. Vis sans fin de centrifugeuse à vis à bol plein selon l'une quelconque des revendications 1 à 3,
**caractérisée en ce que** la surface de section transversale (52) de spire est conçue avec un pied de spire (54), doté de deux barrettes d'appui (62, 64) sensiblement orientées en direction radiale et d'un espace libre (66) situé entre celles-ci.

5. Vis sans fin de centrifugeuse à vis à bol plein selon la revendication 4,
**caractérisée en ce qu'**au moins l'une des barrettes d'appui (62, 64) est traversée par au moins un orifice de passage (68).

6. Vis sans fin de centrifugeuse à vis à bol plein selon la revendication 5,
**caractérisée en ce que** l'au moins un orifice de passage (68) est réalisé dans la seule nervure d'appui (64) détournée du côté racleur (70) de la spire de vis (22).

7. Vis sans fin de centrifugeuse à vis à bol plein selon l'une quelconque des revendications 1 à 6,
**caractérisée en ce que** la surface de section transversale (52) de spire s'étend par une première section (72) dans la direction radiale et est inclinée par une deuxième section (74) vers la direction radiale de la vis sans fin (10).

8. Vis sans fin de centrifugeuse à vis à bol plein selon l'une quelconque des revendications 1 à 7,
**caractérisée en ce que** la surface de section transversale (52) de spire est conçue avec tête de spire (58) épaissie en comparaison d'un col de spire (56).

9. Procédé de fabrication d'une vis sans fin (10) de centrifugeuse à vis à bol plein selon l'une quelconque des revendications 1 à 8, la spire de vis (22) étant fabriqué au moyen d'un soudage de mise en forme par rechargement de matière.
